# DEMANDE DE BREVET EUROPEEN

(11) **EP 0 618 518 A1**
(43) Date de publication de la demande: **05.10.1994**
(21) Numéro de dépôt: 94420087.2
(22) Date de dépôt: 16.03.1994
(51) Int. Cl.: G05B 19/05

(54) **Interface analogique de sécurité**

(30) Priorité: 30.03.1993 FR 9303819
(71) Demandeur: SCHNEIDER ELECTRIC SA, F-92100 Boulogne-Billancourt (FR)
(72) Inventeur: Fretti, J. Paul, F-38050 Grenoble Cedex 09 (FR); Yepez, José, F-38050 Grenoble Cedex 09 (FR); Sellier, Pierre, F-38050 Grenoble Cedex 09 (FR)
(74) Mandataire: Jouvray, Marie-Andrée

(57) **Abrégé**

L'interface comporte une voie normale (11), une voie de secours (12) et une voie de contrôle (13). Des comparateurs dynamiques (20, 21) comparent la cohérence des signaux (Sn) de sortie de la voie normale et des signaux (Sc, Ss) de sortie des voies de secours et de contrôle. En l'absence de défaut, les comparateurs dynamiques fournissent des signaux (B1, B2) oscillants. Si l'un des comparateurs dynamiques détecte une incohérence ou est lui-même défaillant, son signal de sortie est continu. La présence simultanée d'un signal continu en sortie des deux comparateurs conduit au basculement de la charge sur la voie de secours.

## Description

L'invention concerne une interface analogique de sécurité comportant au moins une entrée et une sortie, une voie normale connectée à l'entrée et comportant des moyens d'isolement galvanique, une voie de secours connectée à l'entrée et comportant des moyens d'isolement galvanique, et des moyens de commutation connectant sélectivement, sous le contrôle de moyens de détection de défaut, la sortie de l'interface à la voie normale ou à la voie de secours.

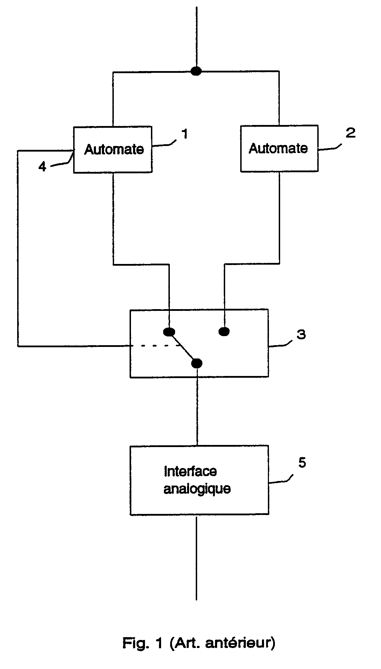

Les systèmes de contrôle-commande utilisés pour le contrôle de processus, notamment pour le contrôle de centrales électriques, doivent contrôler des actionneurs de façon sûre. Classiquement, ceci est réalisé au moyen d'un système du type représenté schématiquement à la figure 1. Deux automates, constituant respectivement un automate de voie normale 1 et un automate de voie de secours 2, sont utilisés de manière redondante. Les entrées des deux automates sont connectées à un même dispositif de surveillance, non représenté, de manière à fournir en sortie des signaux redondants, identiques, appliqués à deux entrées d'un organe de commutation 3. En fonctionnement normal, la sortie de l'organe de commutation 3 est connectée à la sortie de l'automate 1 de voie normale comme représenté sur la figure 1. Lorsque l'automate 1 détecte une défaillance, il émet sur une sortie de chien de garde 4 un signal qui commande le basculement de l'organe de commutation 3, de manière à transmettre à la sortie du circuit de commutation 3 les informations fournies par l'automate de voie de secours. Lorsque les signaux sont analogiques, une interface analogique 5 est interposée entre la sortie de l'organe de commutation 3 et l'actionneur à commander, notamment pour réaliser un isolement galvanique de l'actionneur vis à vis du système de contrôle-commande.

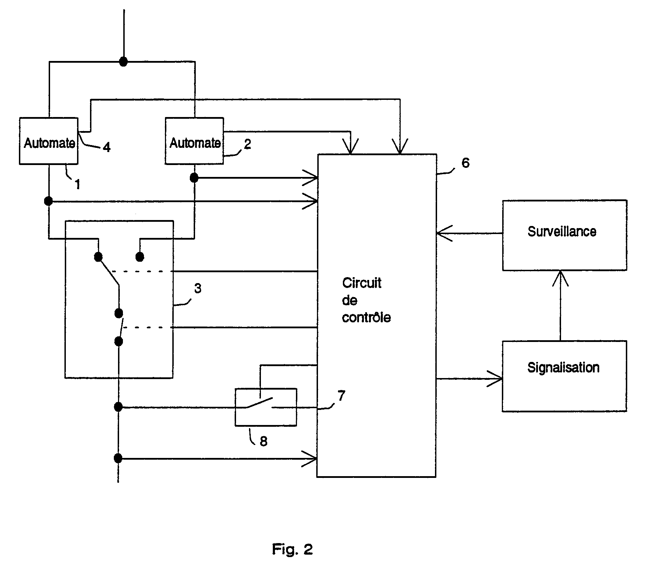

La demande de brevet français 93.00194, déposée le 8.01.1993, décrit des moyens permettant d'améliorer la disponibilité des systèmes de contrôle-commande connus, tout en assurant une sûreté de fonctionnement optimum. Un tel système est représenté à la figure 2. Un circuit de contrôle 6 prend le relais de l'organe de commutation 3 en cas de défaillance de celui-ci. Lorsqu'il détecte une défaillance de l'organe de commutation 3, le circuit de contrôle 6 applique sur une sortie de repli 7 des signaux représentatifs des signaux de sortie des automates 1 et 2 et applique ces signaux à la sortie de l'organe de commutation 3 par l'intermédiaire d'un organe auxiliaire de commutation 8 qu'il contrôle. Le circuit de contrôle 6 surveille également le bon fonctionnement des automates 1 et 2 et fournit à la sortie de l'organe de commutation 3 une position de repli en cas de défaillance des automates. Le circuit de contrôle s'autoteste également lui-même.

La fiabilité des interfaces analogiques 5 existantes est très mauvaise, l'interface analogique constituant ainsi le maillon faible de la chaîne.

L'invention a pour but une interface analogique de sécurité permettant de transmettre, avec une sécurité et une disponibilité acceptables, un signal analogique en réalisant un isolement galvanique entre ses entrées et sorties. Une telle interface est plus particulièrement destinée à être connectée à la sortie de l'organe de commutation 3 d'un système selon la figure 2, sans dégrader ni la sécurité, ni la disponibilité.

Selon l'invention, ce but est atteint par le fait que les moyens de détection de défaut comportent des moyens de comparaison dynamique fournissant un signal oscillant en l'absence de défaut et un signal continu en présence d'un défaut.

Selon un développement de l'invention, les moyens de comparaison dynamique comportent un circuit de comparaison dont la sortie est connectée à une première entrée d'un oscillateur qui est inhibé lorsque la tension appliquée sur ladite première entrée dépasse une valeur prédéterminée.

L'interface comporte, de préférence, une voie de contrôle connectée à l'entrée de l'interface et comportant des moyens d'isolement galvanique, les moyens de comparaison dynamique comportant des premier et second comparateurs dynamiques et des moyens d'appliquer aux entrées des comparateurs dynamiques des signaux représentatifs des signaux de sortie des voies normale, de secours et de contrôle. Alors, le premier comparateur dynamique comporte une première entrée de comparaison connectée à la sortie de la voie de contrôle et une seconde entrée de comparaison connectée à la sortie de la voie normale, le second comparateur dynamique comportant une première entrée de comparaison connectée à la sortie de la voie de secours et une seconde entrée de comparaison connectée à la sortie de la voie normale.

Selon un développement de l'invention, les moyens de détection de défaut comportent des moyens de signalisation de défaut , connectés à la sortie des comparateurs dynamiques, fournissant une signalisation de défaut lorsque la sortie d'au moins l'un des comparateurs dynamiques est un signal continu, et des moyens de contrôle de commutation , connectés à la sortie des comparateurs dynamiques et contrôlant la connexion de la sortie de l'interface à la sortie de la voie de secours lorsque les signaux de sortie des deux comparateurs dynamiques sont continus.

Des alimentations indépendantes, isolées galvaniquement, sont, de préférence, prévues pour les voies normale et de secours.

D'autres avantages et caractéristiques ressortiront plus clairement de la description qui va suivre de modes de réalisations particuliers de l'invention, donnés à titre d'exemples non limitatifs et représentés aux dessins annexés sur lesquels:

Les figures 1 et 2 illustrent des systèmes de contrôle-commande dans lesquels l'invention peut être utilisée.

La figure 3 représente, sous forme de schéma-blocs, un mode de réalisation particulier d'une interface selon l'invention.

La figure 4 représente un mode particulier de réalisation d'un comparateur dynamique de l'interface selon la figure 3.

Les figures 5 à 7 illustrent le fonctionnement du comparateur dynamique selon la figure 4.

La figure 8 représente un mode particulier de réalisation du circuit de contrôle de commutation de l'interface selon la figure 3.

La figure 9 illustre un mode particulier de réalisation d'un circuit d'alimentation de l'interface selon la figure 3.

La figure 10 illustre une variante de réalisation d'un circuit d'alimentation amont d'un circuit selon la figure 9.

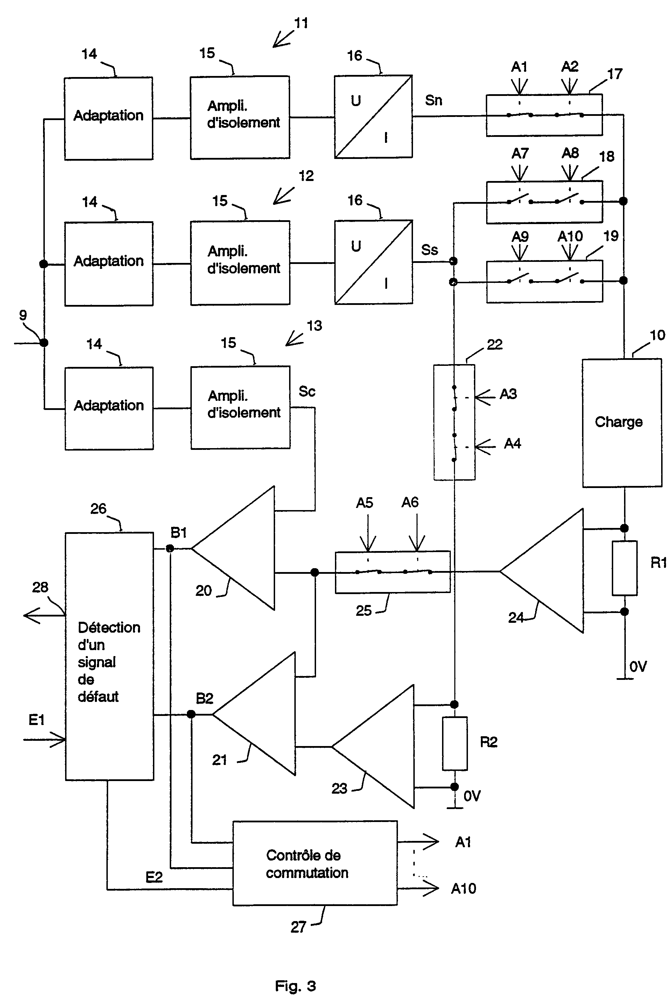

L'interface analogique de sécurité représentée à la figure 3 comporte trois voies de mesure analogiques connectées à une même entrée 9 de l'interface. En fonctionnement normal, c'est à dire en l'absence de défaillance de l'interface, les signaux analogiques appliqués sur l'entrée 9 sont transmis à une charge 10, représentant l'actionneur à contrôler, par l'intermédiaire de la première voie, constituant une voie normale 11. La seconde voie est une voie de secours 12, comportant des éléments identiques à ceux de la voie normale, et qui remplace la voie normale lorsqu'une défaillance est détectée sur celle-ci. Des moyens de commutation permettent d'appliquer à la charge 10 soit les signaux de sortie Sn de la voie normale, soit les signaux de sortie Ss de la voie de secours. Les moyens de commutation sont commandés par des moyens de détection de défaut qui reçoivent des signaux représentatifs des signaux Sn et Ss de sortie des voies normale et secours, ainsi que des signaux Sc de sortie de la troisième voie, qui constitue une voie de contrôle 13.

Chacune des voies 11, 12, 13 comporte un circuit d'adaptation 14, connecté à l'entrée 9. Ce circuit assure simultanément une adaptation d'impédance et un filtrage et éventuellement une amplification du signal d'entrée. L'utilisation de filtres distincts sur chaque voie permet d'améliorer la sécurité et la disponibilité de l'interface. En particulier, cela permet d'éliminer les problèmes de mode commun. Dans chaque voie, la sortie du circuit d'adaptation 14 est connectée à l'entrée d'un circuit amplificateur d'isolement 15 qui réalise la fonction d'isolement galvanique de l'interface. La sortie du circuit amplificateur d'isolement de la voie de contrôle constitue la sortie de la voie de contrôle.

Dans les voies normale et secours, un convertisseur tension-courant 16 est interposé entre la sortie du circuit amplificateur d'isolement 15 et la sortie de la voie. Les signaux Sn et Ss de sortie des voies normale et secours sont donc des signaux de courant.

Sur la figure 3, les moyens de commutation des signaux Sn et Ss sont constitués par des interrupteurs redondés montés en série. Ainsi, un premier circuit 17 de commutation, connecté entre la sortie Sn de la voie normale 11 et la charge 10, comporte deux interrupteurs connectés en série. De second et troisième circuits de commutation, 18 et 19, sont connectés, en parallèle, entre la sortie Ss de la voie de secours et la charge, chacun des circuits 18 et 19 comportant deux interrupteurs connectés en série. La redondance des interrupteurs des circuits 17, 18 et 19 permet d'assurer, de façon sûre, l'ouverture des liaisons entre les voies normale ou de secours et la charge, même si l'un des interrupteurs est collé en position de fermeture. La redondance, en parallèle, des circuits 18 et 19 assure, quant à elle, la possibilité de fermeture de la liaison entre la voie de secours et la charge même si l'un des interrupteurs est collé en position d'ouverture. Pour garantir une bonne sécurité, chaque interrupteur est commandé par un signal distinct, A1 et A2 pour les interrupteurs du circuit 17, A7 et A8 pour les interrupteurs du circuit 18, A9 et A10 pour les interrupteurs du circuit 19. En fonctionnement normal, les signaux A1 et A2, identiques, commandent la fermeture des interrupteurs du circuit 17, tandis que les signaux A7 à A10, opposés aux signaux A1 et A2, commandent l'ouverture des interrupteurs des circuits 18 et 19.

Pour détecter une défaillance interne à l'interface, les moyens de détection de défaut contrôlent la cohérence des signaux Sn, Ss et Sc fournis par les trois voies.

Dans le mode de réalisation particulier représenté à la figure 3, le circuit de détection de défaut comporte deux comparateurs dynamiques 20 et 21 qui ne diffèrent l'un de l'autre que par les signaux appliqués sur leurs deux entrées de comparaison. Une première entrée de comparaison du comparateur dynamique 20 est connectée à la sortie de la voie de contrôle 13, tandis qu'une première entrée de comparaison du comparateur dynamique 21 est connectée, par l'intermédiaire d'un commutateur de relecture 22, et d'un amplificateur de mesure 23, à la sortie de la voie de secours 12. Les secondes entrées de comparaison des deux comparateurs dynamiques sont connectés à la sortie de la voie normale 11 par l'intermédiaire du circuit de commutation 17, de la charge 10, d'un amplificateur de mesure 24 et d'un commutateur de relecture 25.

En fonctionnement normal, le circuit de commutation 17 et les commutateurs de relecture 22 et 25 sont fermés, tandis que les circuits de commutation 18 et 19 sont ouverts. La voie normale applique alors des signaux de courant Sn à la charge 10. Ces signaux Sn sont transformés en tension à la sortie de la charge 10 par l'amplificateur de mesure 24, comportant une résistance d'entrée R1 connectée en série avec la charge, entre la sortie des organes de commutation et la masse. Des signaux de tension, représentatifs des signaux de courant Sn de sortie de la voie normale sont alors appliqués aux secondes entrées de comparaison des deux comparateurs dynamiques 20 et 21.

Simultanément, les signaux de courant Ss fournis par la voie de secours sont transformés en tension par l'amplificateur de mesure 23, qui comporte une résistance d'entrée R2 connectée en série avec le commutateur 22 entre la sortie de la voie de secours et la masse. En fonctionnement normal, les comparateurs dynamiques 20 et 21 comparent donc des signaux représentatifs des signaux Sn de sortie de la voie normale respectivement aux signaux Sc de sortie de la voie de contrôle et à des signaux représentatifs des signaux Ss de sortie de la voie de secours.

Lorsqu'un des comparateurs dynamiques détecte un écart supérieur à une valeur prédéterminée entre les signaux appliqués à ses entrées, il fournit un signal de défaut. Les signaux B1 et B2 de sortie des comparateurs dynamiques 20 et 21 sont appliqués à l'entrée d'un circuit 26 de détection d'un signal de défaut et à l'entrée d'un circuit 27 de contrôle de commutation.

Le circuit 27 de contrôle de commutation fournit des signaux A1 à A10 de commande des circuits de commutation 17 à 19 et des commutateurs de relecture 22 et 25. Les commutateurs de relecture 22 et 25 comportent, de préférence, deux interrupteurs connectés en série, commandés par des signaux de commande distincts, A3 et A4 pour le commutateur 22, et A5 et A6 pour le commutateur 25, de manière à améliorer la sécurité de l'ensemble.

En fonctionnement normal, les signaux Sn, Ss et Sc de sortie des trois voies sont cohérents et les comparateurs dynamiques 20 et 21 ne fournissent pas de signaux de défaut. Le circuit 27 de contrôle de commutation fournit alors des signaux A1 à A6 commandant la fermeture des interrupteurs correspondants et des signaux A7 à A10 commandant l'ouverture des interrupteurs correspondants.

En cas de défaillance de la voie normale 11, ou en cas de coupure de la connexion entre l'interface et la charge, les signaux Sn ne sont plus en cohérence avec les signaux Sc et Ss les deux comparateurs dynamiques 20 et 21 fournissent simultanément un signal de défaut. Le circuit 27 de contrôle de commutation fait alors passer l'interface sur la voie de secours 12. Les signaux A7 à A10 commandent la fermeture des circuits de commutation 18 et 19 et les signaux A1 et A2 commandent l'ouverture du circuit de commutation 17, connectant ainsi la charge 10 à la sortie de la voie de secours tout en l'isolant de la sortie de la voie normale. Simultanément, les signaux A3 à A6 commandent l'ouverture des commutateurs de relecture 22 et 25, inhibant ainsi le fonctionnement des comparateurs dynamiques. Les comparateurs dynamiques continuent alors à fournir en sortie des signaux de défaut. Cette mémorisation du défaut est maintenue jusqu'à ce que, le défaut ayant été corrigé, un opérateur fournisse un signal E1 d'acquittement de défaut au circuit 26 de détection d'un signal de défaut, qui transmet alors un signal E2 d'acquittement au circuit de contrôle de commutation 27. Le signal E1 peut être obtenu par action manuelle sur un bouton-poussoir d'acquittement de défaut, non représenté. Lorsqu'il reçoit le signal d'acquittement E2, le circuit 27 produit des signaux A1 à A10 contrôlant le basculement de la charge sur la sortie de la voie normale et la refermeture des commutateurs de relecture, ramenant ainsi l'interface en fonctionnement normal.

En cas de défaillance de la voie de secours 12 seule ou de la voie de contrôle 13 seule, un seul des comparateurs dynamiques fournit un signal de défaut. Le circuit 27 de contrôle de commutation est conçu de manière à ne pas modifier le fonctionnement de l'interface et à maintenir la connexion de la charge et de la sortie de la voie normale. La présence d'un défaut dans l'une des voies de secours ou de contrôle est cependant détectée par le circuit 26 de détection d'un signal de défaut.

Le circuit 26 de détection d'un signal de défaut fournit, de préférence, une indication visuelle de la présence d'un défaut ainsi qu'une information sur une sortie 28, permettant une signalisation à distance. Selon un mode de réalisation préférentiel, l'indication visuelle et/ou l'information transmise sur la sortie 28 peut être représentative du type de défaut détecté, c'est à dire être différente selon qu'un défaut est signalé par l'un ou l'autre des comparateurs dynamiques, ou par les deux simultanément signifiant une défaillance de la voie de contrôle, de la voie de secours ou de la voie normale.

Des comparateurs classiques n'offrent pas le niveau de sécurité requis. En effet, en cas de défaillance d'un comparateur classique, le signal de sortie est aléatoire. L'utilisation de comparateurs 20 et 21 dynamiques permet d'obtenir une sécurité acceptable. Un comparateur dynamique fournit un signal B de sortie oscillant en l'absence de défaut à l'entrée, c'est à dire lorsque l'écart entre les signaux appliqués sur ses entrées de comparaison ne dépasse pas une valeur prédéterminée. Par contre, si cet écart dépasse ladite valeur, le signal B de sortie devient un signal continu. Il en va de même en cas de défaillance interne au comparateur. La sécurité est donc maximum, tout défaut, en entrée ou interne, étant signalé par le comparateur dynamique par un arrêt des oscillations de son signal de sortie.

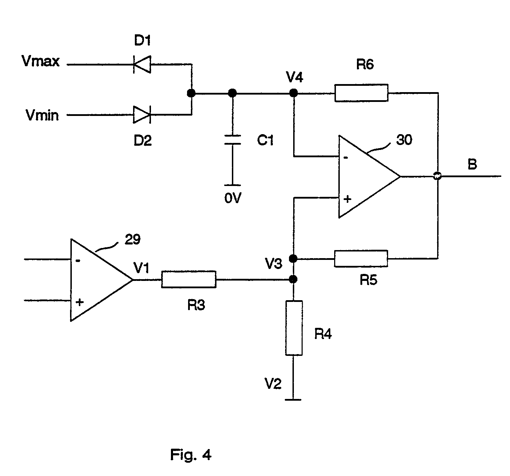

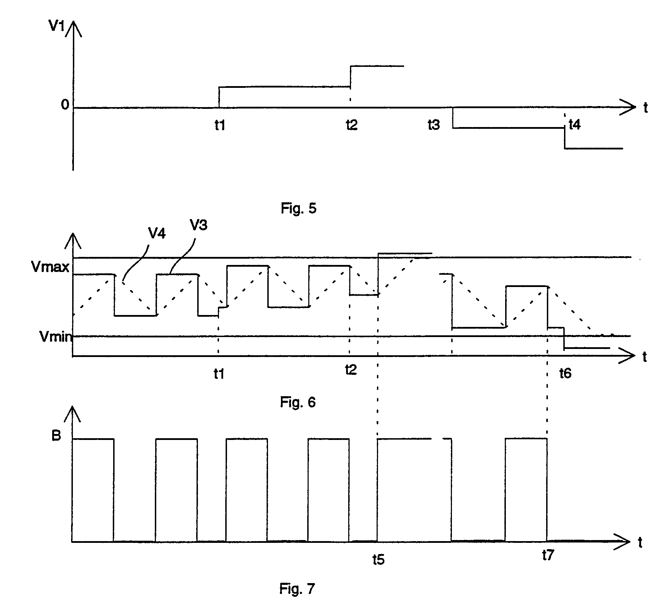

La figure 4 représente un mode de réalisation préférentiel des comparateurs dynamiques 20 et 21. Chaque comparateur comporte un amplificateur différentiel 29 dont les entrées inverseuse et non-inverseuse constituent les entrées de comparaison du comparateur dynamique. La tension V1 de sortie de l'amplificateur différentiel 29 est nulle si les tensions appliquées sur les entrées de comparaison sont égales. Dans le cas contraire, la tension V1 prend une valeur, positive ou négative, représentative de la différence entre les tensions d'entrée du comparateur dynamique. La sortie de l'amplificateur opérationnel 29 est connectée, par l'intermédiaire d'une résistance R3, à une entrée non-inverseuse d'un amplificateur opérationnel 30. L'entrée non-inverseuse de l'amplificateur opérationnel 30 est de plus connectée à une tension de référence V2 par une résistance R4 et, par l'intermédiaire d'une résistance R5, à la sortie de l'amplificateur opérationnel 30, qui constitue la sortie du comparateur dynamique. Une résistance R6 connecte la sortie de l'amplificateur opérationnel 30 à son entrée inverseuse. Un condensateur C1 est connecté entre l'entrée inverseuse de l'amplificateur 30 et la masse. L'entrée inverseuse de l'amplificateur 30 est connectée à l'anode d'une diode D1 sans seuil, dont la cathode est connectée à une tension Vmax, et à la cathode d'une diode sans seuil D2, dont l'anode est connectée à une tension Vmin inférieure à Vmax. L'amplificateur opérationnel 30 constitue avec les résistances R5, R6, le condensateur C, et les diodes D1 à D2, un oscillateur dont les seuils sont fixés par les tensions Vmin et Vmax. Son fonctionnement est illustré sur les figures 5 à 7.

La figure 5 représente différentes valeurs de V1 et les figures 6 et 7 représentent les variations correspondantes des tensions V3 et V4 présentes respectivement sur les entrées non-inverseuse et inverseuse de l'amplificateur 30, ainsi que les variations correspondantes du signal B de sortie du comparateur dynamique, en fonction du temps.

Jusqu'à un instant t1, les tensions d'entrée du comparateur dynamique sont identiques et le signal V1 est nul. La tension V3, constituée par la somme pondérée des tensions V1, V2 et B, oscille entre deux valeurs comprises entre Vmin et Vmax. La valeur de V2 est choisie de manière à ce que la valeur moyenne de V3 soit placée au centre de la fenêtre constituée par Vmin et Vmax lorsque V1 est nul. Le signal B de sortie du comparateur oscille de manière analogue à V3, entre un état bas, voisin de 0V, et un état haut, correspondant à la tension de saturation de l'amplificateur 30. En effet, lorsque la tension V3 passe à sa valeur haute, inférieure ou égale à Vmax, la tension V4 qui était égale à la valeur basse de V3, supérieure ou égale à Vmin, augmente, le condensateur C1 se changeant à travers R6. Lorsque V4 atteint la valeur haute de V3, la sortie B bascule et prend sa valeur basse, faisant passer brusquement V3 à sa valeur basse. La tension V4 diminue alors, le condensateur C1 se déchargeant à travers R6 jusqu'à ce que la valeur de V4 devienne égale à V3 et fasse de nouveau basculer B et V3.

Le même phénomène se produit entre les instants t1 et t2 et entre les instants t3 et t4 où la tension V1 n'est plus nulle, mais où cette valeur est suffisamment faible, en valeur absolue, pour que V3 oscille à l'intérieur de la fenêtre formée par Vmin et Vmax. Sur les figures 5 à 7, la tension V1 est positive entre les instants t1 et t2 et négative entre t3 et t4. Les oscillations de la tension V3 sont donc décalées vers le haut entre t1 et t2 et vers le bas entre t3 et t4.

Aux instants t2 et t4, l'écart entre les tensions d'entrée du comparateur dynamique augmente encore, respectivement dans un sens ou dans l'autre, et la tension V1 dépasse, en valeur absolue, une valeur prédéterminée. A l'instant t2, les oscillations de la tension V3 se décalent vers le haut et la tension V3 devient supérieure à Vmax à un instant t5. La tension V4 ne peut plus augmenter lorsqu'elle atteint la valeur Vmax, en raison de la présence de la diode D1, de sorte que la tension V4 reste inférieure à V3 à partir de l'instant t5 et l'amplificateur 30 reste saturé, sa sortie B se bloquant à sa valeur haute. De manière analogue, à l'instant t4 les oscillations de la tension V3 se décalent vers le bas et la tension V3 devient inférieure à Vmin à un instant t6. La tension V4 ne peut plus diminuer lorsqu'elle atteint la valeur Vmin, en raison de la présence de la diode D2, de sorte que la tension V4 reste supérieure à V3 à partir d'un instant t7 auquel le condensateur C1 a commencé à se décharger et la sortie B de l'amplificateur se bloque à sa valeur basse.

Ainsi, le signal B de sortie du comparateur dynamique est un signal oscillant tant que l'écart entre ses tensions d'entrée reste inférieur à une valeur prédéterminée et le signal B devient un signal continu, haut ou bas, de défaut si cet écart excède ladite valeur prédéterminée. Toute défaillance interne au comparateur dynamique entraîne également l'arrêt des oscillations et la production d'un signal B continu de défaut.

Les valeurs Vmin, Vmax et Vref ainsi que les valeurs du condensateur C et des résistances R3 à R6 sont déterminées en fonction des valeurs des tensions disponibles et de la précision désirée. A titre d'exemple ces valeurs peuvent être choisies de manière à ce qu'un écart supérieur à 5% des tensions d'entrée conduise à un signal de défaut.

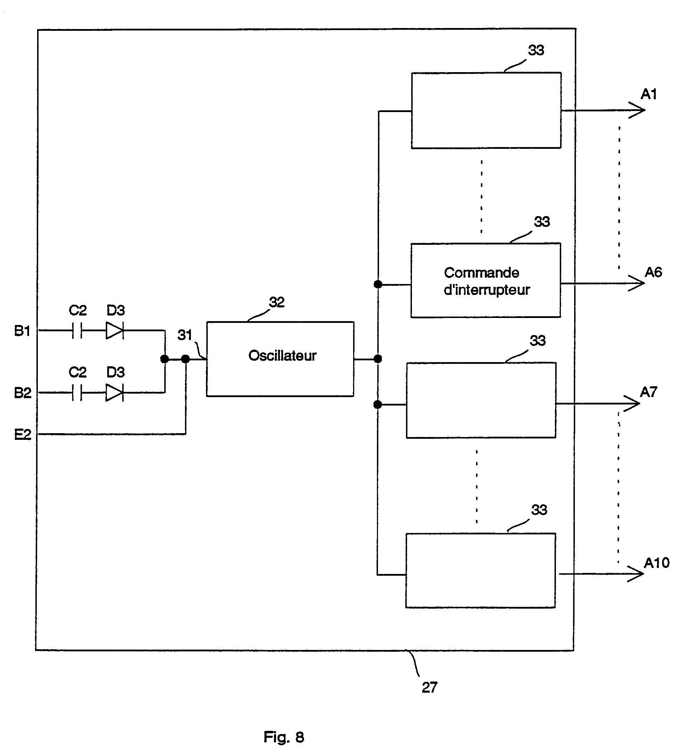

La figure 8 représente plus en détail un mode de réalisation particulier du circuit 27 de contrôle de commutation de la figure 3. Les signaux B1 et B2 de sortie des comparateurs dynamiques 20 et 21 sont appliqués à deux entrées du circuit 27. Chaque entrée du circuit 27 est connectée à une entrée d'alimentation 31 d'un oscillateur 32 par l'intermédiaire d'un condensateur C2 et d'une diode D3. Les condensateurs C2 forment une liaison capacitive et les diodes D3 constituent un circuit logique OU. Ainsi, un signal d'alimentation est appliqué à l'entrée d'alimentation 31 de l'oscillateur lorsqu'au moins l'un des signaux B1 et B2 est un signal oscillant. Par contre, si les deux signaux B1 et B2 sont continus, alors aucun signal d'alimentation n'est appliqué à l'entrée d'alimentation 31 et l'oscillateur 32 est inhibé. L'oscillateur 32 peut comporter des moyens de filtrage et de régulation, non représentés, pour mettre en forme la tension d'alimentation appliquée à l'oscillateur. Le signal E2 d'acquittement fourni par le circuit de détection d'un signal de défaut 26 est également appliqué à l'entrée d'alimentation 31 de l'oscillateur, permettant ainsi le redémarrage de l'oscillateur 32 après élimination d'un défaut et acquittement par un opérateur.

Le circuit de contrôle de commutation 27 comporte des circuits 33 de commande d'interrupteurs distincts pour fournir les signaux de commande A1 à A10 des différents interrupteurs. Lorsque l'oscillateur 32 fonctionne, les circuits 33 fournissent des signaux A1 à A6 de commande de fermeture et des signaux A7 à A10 de commande d'ouverture. Par contre, lorsque l'oscillateur 32 est inhibé, les circuits 33 fournissent des signaux A1 à A6 de commande d'ouverture et des signaux A7 à A10 de commande de fermeture.

Pour optimiser la sécurité de l'interface, celle-ci comporte deux circuits d'alimentation séparés, non représentés sur la figure 3, un premier circuit d'alimentation destiné à la voie de secours et un second circuit d'alimentation destiné aux voies normale et de contrôle.

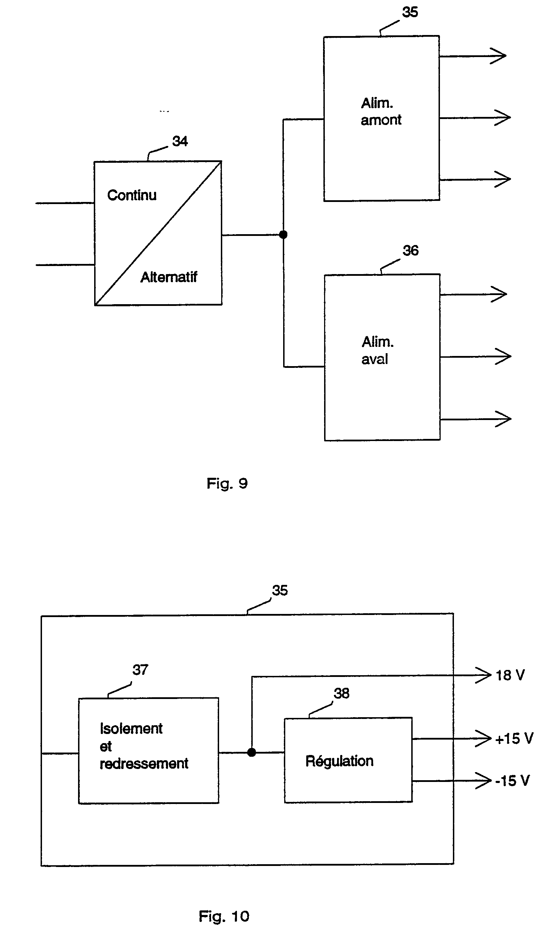

La figure 9 illustre, de manière schématique, un mode de réalisation préférentiel de l'un des circuits d'alimentation. Chaque circuit d'alimentation est alimenté en continu, par exemple par une tension de 24V. Cette tension continue est appliquée à l'entrée d'un convertisseur continu-alternatif 34, dont la sortie est connectée à l'entrée d'un circuit d'alimentation amont 35 et d'un circuit d'alimentation aval 36. Le circuit d'alimentation amont 35 est destiné à alimenter les éléments électroniques de la voie correspondante situés en amont de l'isolement galvanique réalisé par le circuit amplificateur d'isolement 15 correspondant. Le circuit d'alimentation aval 36 est destiné à alimenter les éléments électroniques de la voie correspondante situés en aval de l'isolement galvanique.

La figure 10 illustre schématiquement un mode de réalisation particulier d'un circuit d'alimentation amont 35, ou aval 36. Chacun de ces circuits comporte un circuit 37 d'isolement et de redressement, fournissant une tension redressée, par exemple 18V. La tension redressée est régulée dans un circuit de régulation 38 de manière à fournir des tensions continues stables aux différents éléments électroniques, par exemple +15V et -15V.

La passage par une transformation continu-alternative permet, grâce aux circuits d'isolement 37 disposés en aval du convertisseur 34, d'isoler la tension d'entrée des tensions de sortie, et les tensions de sortie du circuit d'alimentation amont de celles du circuit d'alimentation aval.

L'invention n'est pas limitée aux modes de réalisation particuliers représentés sur les figures et décrits ci-dessus. En particulier, si l'actionneur doit être commandé en tension et non en courant, les convertisseurs tension/courant 16 sont inutiles et la tension représentative de Sn aux entrées de comparaison des comparateurs dynamiques 20 et 21 est mesurée aux bornes de la charge 10. Le signal d'acquittement de défaut E1 peut également servir à la mise en route de l'interface.

Le mode de réalisation préférentiel de l'interface selon la figure 3 comporte 3 voies distinctes et la comparaison s'effectue d'une part entre Sn et Sc et d'autre part entre Sn et Ss. Une interface ne comportant pas de voie de contrôle peut être envisagée. Elle ne comporterait alors qu'un seul comparateur dynamique pouvant comparer les signaux de sortie des voies normale et de secours ou, éventuellement, le signal d'entrée de l'interface à son signal de sortie. Dans tous les cas, le comparateur dynamique produit un signal oscillant en fonctionnement normal et un signal continu lorsqu'il détecte une incohérence entre les signaux appliqués sur ses entrées ou lorsqu'il présente une défaillance interne.

## Revendications

1. Interface analogique de sécurité comportant au moins une entrée (9) et une sortie, une voie normale (11) connectée à l'entrée (9) et comportant des moyens (15) d'isolement galvanique, une voie de secours (12) connectée à l'entrée (9) et comportant des moyens (15) d'isolement galvanique, et des moyens de commutation (17 à 19) connectant sélectivement, sous le contrôle de moyens de détection de défaut, la sortie de l'interface à la voie normale ou à la voie de secours, interface caractérisée en ce que les moyens de détection de défaut comportent des moyens de comparaison dynamique (20, 21) fournissant un signal (B) oscillant en l'absence de défaut et un signal continu en présence d'un défaut.

2. Interface selon la revendication 1, caractérisée en ce que les moyens de comparaison dynamique (20, 21) comportent un circuit de comparaison (29) dont la sortie est connectée à une première entrée d'un oscillateur qui est inhibé lorsque la tension (V1) appliquée sur ladite première entrée dépasse une valeur prédéterminée.

3. Interface selon la revendication 2, caractérisée en ce que l'oscillateur comporte un amplificateur différentiel (30) ayant une entrée non-inverseuse connectée à la sortie du circuit de comparaison (29) par l'intermédiaire d'une première résistance (R3), à une tension de référence (V2) par l'intermédiaire d'une seconde résistance (R4) et à la sortie de l'amplificateur différentiel par l'intermédiaire d'une troisième résistance (R5), et une entrée inverseuse connectée par l'intermédiaire d'une quatrième résistance (R6) à la sortie de l'amplificateur différentiel, par un condensateur (C1) à la masse, l'entrée inverseuse étant connectée à l'anode d'une première diode (D1), ayant une cathode connectée à une tension maximale prédéterminée (Vmax), et à la cathode d'une seconde diode (D2) ayant une anode connectée à une tension minimale prédéterminée (Vmin) inférieure à la tension maximale.

4. Interface selon l'une quelconque des revendications 1 à 3, caractérisée en ce qu'elle comporte une voie de contrôle (13) connectée à l'entrée (9) de l'interface et comportant des moyens (15) d'isolement galvanique, les moyens de comparaison dynamique comportant des premier et second comparateurs dynamiques (20, 21) et des moyens (22 à 25) d'appliquer aux entrées des comparateurs dynamiques des signaux représentatifs des signaux de sortie des voies normale, de secours et de contrôle.

5. Interface selon la revendication 4, caractérisée en ce que le premier comparateur dynamique (20) comporte une première entrée de comparaison connectée à la sortie (Sc) de la voie de contrôle et une seconde entrée de comparaison connectée à la sortie de la voie normale, le second comparateur dynamique (21) comportant une première entrée de comparaison connectée à la sortie de la voie de secours et une seconde entrée de comparaison connectée à la sortie de la voie normale.

6. Interface selon la revendication 5, caractérisée en ce que les moyens de détection de défaut comportent des moyens de signalisation de défaut (26), connectés à la sortie des comparateurs dynamiques, fournissant une signalisation de défaut lorsque la sortie d'au moins l'un des comparateurs dynamiques est un signal continu, et des moyens de contrôle de commutation (27), connectés à la sortie des comparateurs dynamiques et contrôlant la connexion de la sortie de l'interface à la sortie de la voie de secours lorsque les signaux (B1, B2) de sortie des deux comparateurs dynamiques sont continus.

7. Interface selon la revendication 6, caractérisée en ce que les moyens de contrôle de commutation (27) contrôlent, lorsque les signaux de sortie des deux comparateurs dynamiques sont continus, l'ouverture de moyens de commutation de relecture (25, 22), normalement fermés, connectés respectivement entre les secondes entrées de comparaison des comparateurs dynamiques (20, 21) et la sortie de la voie normale et entre la première entrée de comparaison du second comparateur dynamique (21) et la sortie de la voie de secours.

8. Interface selon l'une quelconque des revendications 1 à 7, caractérisée en ce qu'elle comporte des moyens d'alimentation indépendants, isolés galvaniquement, pour les voies normales et de secours.

9. Interface selon l'une quelconque des revendications 1 à 8, caractérisée en ce que chacune des voies comporte des moyens de filtrage (14) indépendants.

10. Interface selon l'une quelconque des revendications 1 à 9, caractérisée en ce que les moyens de commutation comportent des interrupteurs redondés connectés en série.
